(19) Europäisches Patentamt
European Patent Office
Office européen des brevets

(11) EP 4 428 172 A1

(12) EUROPEAN PATENT APPLICATION
published in accordance with Art. 153(4) EPC

(43) Date of publication:
11.09.2024 Bulletin 2024/37

(21) Application number: 22904540.6

(22) Date of filing: 25.11.2022

(51) International Patent Classification (IPC):
C08G 63/60 (2006.01) C08G 63/668 (2006.01)
C08G 63/85 (2006.01) C08G 63/86 (2006.01)

(52) Cooperative Patent Classification (CPC):
C08G 63/60; C08G 63/668; C08G 63/85;
C08G 63/86

(86) International application number:
PCT/KR2022/018852

(87) International publication number:
WO 2023/106707 (15.06.2023 Gazette 2023/24)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 07.12.2021 KR 20210173964

(71) Applicant: Kolon Industries, Inc.
Seoul 07793 (KR)

(72) Inventors:
- KIM, Ho Sub
Seoul 07793 (KR)
- PARK, No Woo
Seoul 07793 (KR)
- HONG, Choong Hee
Seoul 07793 (KR)
- NOH, Kyung Gyu
Seoul 07793 (KR)
- PARK, Ki Hyun
Seoul 07793 (KR)

(74) Representative: Ter Meer Steinmeister & Partner
Patentanwälte mbB
Nymphenburger Straße 4
80335 München (DE)

# (54) DEGRADABLE POLYESTER RESIN AND MANUFACTURING METHOD THEREOF

(57) The present invention relates to a polyester resin and a manufacturing method thereof. Specifically, an embodiment of the present invention provides a polyester resin consisting of a copolymer of a monomer mixture including a furan dicarboxylic acid-based compound, an aliphatic diol-based compound, and a lactone-based compound.

EP 4 428 172 A1

## Description

### [Technical Field]

The present invention relates to a biodegradable polyester resin and a manufacturing method thereof.

### [Background Art]

A polyester resin refers to a polymer resin having an ester (RO-C(=O)-R') functional group in the main chain and is used for various purposes such as packaging, displays, insulating materials, etc. in various industrial fields.

Representative examples of the polyester resin may be a polyethylene terephthalate (PET) resin prepared by a reaction of terephthalic acid (TPA) and ethylene glycol (EG).

However, a main raw material of the terephthalic acid is paraxylene, which is produced by refining crude oil. Accordingly, the production and use of the terephthalic acid causes depletion of crude oil resources. In addition, the terephthalic acid, when decomposed, discharges carbon dioxide, which causes environmental pollution and climate change such as global warming, etc.

In this regard, attempts to replace the terephthalic acid with 2,5-furan dicarboxylic acid (FDCA) in the production of the polyester resin are being made. Herein, the furan dicarboxylic acid, which is a material derived from biomass, may prevent the depletion of crude oil resources and minimize the environmental pollution, the climate change, etc. due to its biodegradability.

However, the furan dicarboxylic acid, which is a compound with low thermal stability, causes thermal discoloration such as yellowing, browning, etc. during its esterification reaction with a diol component.

This problem may not be solved by simply mixing the furan dicarboxylic acid with aliphatic dicarboxylic acid in the reaction of the furan dicarboxylic acid with the diol component.

### [Disclosure]

### [Description of the Drawings]

[Technical Problem]

The purpose of the present invention is to provide a polyester resin that exhibits excellent biodegradability and suppresses thermal discoloration during the manufacturing process.

[Technical Solution]

In an embodiment of the present invention, provided is a polyester resin consisting of a copolymer of a monomer mixture including a furan dicarboxylic acid-based compound, an aliphatic diol-based compound, and a lactone-based compound.

### [Advantageous Effects]

According to embodiments of the present invention, it is possible to provide a polyester resin that exhibits excellent biodegradability and suppresses thermal discoloration during the manufacturing process.

### [Mode for Invention]

(Definition of Terms)

Throughout this specification, when a part "includes" a certain element, this means that it may further include other elements rather than excluding other elements, unless specifically stated to the contrary.

As used throughout this specification, the term "~ing step" or "step of ~ing" does not mean "step for ~ing."

In this specification, 'moiety' refers to a certain portion or unit derived from a specific compound when the specific compound participates in a chemical reaction and is included in the product of the chemical reaction.

For example, in the polyester resin, the 'moiety' derived from the furan dicarboxylic acid-based compound refers to a portion derived from the furan dicarboxylic acid-based compound.

As used herein, unless otherwise specified, the term "alkyl" refers to a saturated, monovalent aliphatic hydrocarbon radical, including linear and branched chains, having the specified number of carbon atoms. The alkyl group

typically has 1 to 20 carbon atoms ("$C_1$-$C_{20}$ alkyl"), preferably 1 to 12 carbon atoms ("$C_1$-$C_{12}$ alkyl"), more preferably 1 to 8 carbon atoms ("$C_1$-$C_8$ alkyl"), 1 to 6 carbon atoms ("$C_1$-$C_6$ alkyl"), or 1 to 4 carbon atoms ("$C_1$-$C_4$ alkyl"). Examples of the alkyl group include methyl, ethyl, n-propyl, isopropyl, n-butyl, iso-butyl, tert-butyl, n-pentyl, isopentyl, neopentyl, n-hexyl, n-heptyl, n-octyl, and the like. The alkyl group may be substituted or unsubstituted. In particular, unless otherwise specified, an alkyl group may be substituted with one or more halogens, up to the total number of hydrogen atoms present on the alkyl moiety. Thus, $C_1$-$C_4$ alkyl includes halogenated alkyl groups, such as fluorinated alkyl groups having 1 to 4 carbon atoms, such as trifluoromethyl ($-CF_3$) or difluoroethyl ($-CH_2CHF_2$).

The alkyl group described herein as optionally substituted may be substituted with one or more substituents, and the substituents are independently selected unless otherwise stated. The total number of substituents is equal to the total number of hydrogen atoms on the alkyl moiety to the extent that such substitution satisfies chemical sense. Optionally substituted alkyl groups may typically have 1 to 6 optional substituents, often 1 to 5 optional substituents, preferably 1 to 4 optional substituents, more preferably 1 to 3 optional substituents.

Suitable optional substituents for the alkyl group include, but are not limited to, $C_1$-$C_8$ alkyl, $C_2$-$C_8$ alkenyl, $C_2$-$C_8$ alkynyl, $C_3$-$C_8$ cycloalkyl, 3- to 12-membered heterocyclyl, $C_6$-$C_{12}$ aryl, 5- to 12-membered heteroaryl, halo, =O (oxo), =S (thiono), =N-CN, =N-OR$^x$, =NR$^x$, -CN, -C(O)R$^x$, -CO$_2$R$^x$, -C(O)NR$^x$R$^y$, - SR$^x$, -SOR$^x$, -SO$_2$R$^x$, -SO$_2$NR$^x$R$^y$, -NO$_2$, -NR$^x$R$^y$, -NR$^x$C(O)R$^y$, -NR$^x$C(O)NR$^x$R$^y$, - NR$^x$C(O)OR$^x$, -NR$^x$SO$_2$R$^y$, -NR$^x$SO$_2$NR$^x$R$^y$, -OR$^x$, -OC(O)R$^X$, and -OC(O)NR$^x$R$^y$, wherein each R$^x$ and R$^y$ are each independently hydrogen (H), $C_1$-$C_8$ alkyl, $C_1$-$C_8$ acyl, $C_2$-$C_8$ alkenyl, $C_2$-$C_8$ alkynyl, $C_3$-$C_8$ cycloalkyl, 3- to 12- membered heterocyclyl, $C_6$-$C_{12}$ aryl, or 5- to 12-membered heteroaryl, or R$^x$ and R$^y$ may form a 3- to 12-membered heterocyclyl or 5- to 12-membered heteroaryl ring together with the N atom to which they are attached, each may optionally include 1, 2 or 3 additional heteroatoms selected from O, N and S(O)q, where q is 0 to 2; each of R$^x$ and R$^y$ is optionally substituted with one to three substituents selected from halo, =O, =S, =N-CN, =N-OR', =NR', -CN, -C(O)R', - CO$_2$R', -C(O)NR'$_2$, -SOR', -SO$_2$R', -SO$_2$NR'$_2$, -NO$_2$, -NR'$_2$, -NR'C(O)R', - NR'C(O)NR'$_2$, -NR'C(O)OR', -NR'SO$_2$R', -NR'SO$_2$NR'$_2$, -OR', -OC(O)R' and - OC(O)NR'$_2$, wherein each R' is each independently hydrogen (H), $C_1$-$C_8$ alkyl, $C_1$-$C_8$ acyl, $C_2$-$C_8$ alkenyl, $C_2$-$C_8$ alkynyl, $C_3$-$C_8$ cycloalkyl, 3- to 12- membered heterocyclyl, $C_6$-$C_{12}$ aryl, or $C_5$-$C_{12}$ heteroaryl; each of the $C_1$-$C_8$ alkyl, $C_2$-$C_8$ alkenyl, $C_2$-$C_8$ alkynyl, $C_3$-$C_8$ cycloalkyl, 3- to 12- membered heterocyclyl, $C_6$-$C_{12}$ aryl and 5- to 12-membered heteroaryl may be optionally substituted as further defined.

As used herein, unless otherwise specified, the term "alkoxy" refers to a monovalent -O-alkyl group in which the alkyl moiety has the specified number of carbon atoms. The alkoxy group typically has 1 to 8 carbon atoms ("$C_1$-$C_8$ alkoxy"), or 1 to 6 carbon atoms ("$C_1$-$C_6$ alkoxy"), or 1 to 4 carbon atoms ("$C_1$-$C_4$ alkoxy"). For example, $C_1$-$C_4$ alkoxy includes methoxy ($-OCH_3$), ethoxy ($-OCH_2CH_3$), isopropoxy ($-OCH(CH_3)_2$), tert-butyloxy ($-OC(CH_3)_3$), and the like. The alkoxy group is unsubstituted or substituted on the alkyl moiety by the same groups described herein as suitable for alkyl. In particular, the alkoxy group may be optionally substituted with one or more halo atoms, especially one or more fluoro atoms, up to the total number of hydrogen atoms present on the alkyl moiety. Such groups are more specifically referred to as "haloalkoxy" groups having a certain number of carbon atoms and substituted with one or more halo substituents, for example, when fluorinated, "fluoroalkoxy" groups, and typically such groups have from 1 to 6 carbon atoms, preferably 1 to 4 carbon atoms, often 1 or 2 carbon atoms, and 1, 2 or 3 halo atoms (i.e., "$C_1$-$C_6$ haloalkoxy", "$C_1$-$C_4$ haloalkoxy" or "$C_1$-$C_2$ haloalkoxy"). More specifically, the fluorinated alkyl group may be specifically referred to as a fluoroalkoxy group, typically substituted with 1, 2 or 3 fluoro atoms, such as a $C_1$-$C_6$, $C_1$-$C_4$, or $C_1$-$C_2$ fluoroalkoxy group. Therefore, $C_1$-$C_4$ fluoroalkoxy includes trifluoromethyloxy ($-OCF_3$), difluoromethyloxy ($-OCF_2H$), fluoromethyloxy ($-OCFH_2$), difluoroethyloxy ($-OCH_2CF_2H$), and the like.

As used herein, unless otherwise specified, the term "divalent aliphatic hydrocarbon (i.e., alkylene)" refers to a divalent hydrocarbyl group having a specified number of carbon atoms, capable of linking two other groups together. The alkylene often refers to $-(CH_2)_n-$, where n is 1 to 8, preferably n is 1 to 4. Where specified, the alkylene may also be substituted with other groups and may include at least one degree of unsubstitution (i.e., an alkenylene or alkynylene moiety) or ring. The open valency of an alkylene need not be at the opposite end of the chain. Accordingly, branched alkylene groups such as - CH(Me)-, $-CH_2CH(Me)-$ and $-C(Me)_2-$ are also included within the scope of the term "alkylene", and cyclic groups such as cyclopropane-1,1-diyl and unsaturated groups such as ethylene (-CH=CH-) or propylene ($-CH_2-CH=CH-$). The alkylene groups are unsubstituted or substituted by the same groups described herein as suitable for alkyl.

As used herein, the terms "optionally substituted" and "substituted or unsubstituted" may be used interchangeably to indicate that the particular group described may have no non-hydrogen substituents (i.e., unsubstituted), or that the group may have one or more non-hydrogen substituents (i.e., unsubstituted). Unless otherwise specified, the total number of substituents that may be present is equal to the number of H atoms present in the unsubstituted form of the group being described. If an optional substituent is attached through a double bond (e.g., an oxo (=O) substituent), the group occupies available valency and the total number of other substituents included is reduced by two. When optional substituents are independently selected from the list of substitutes, the selected groups are the same or different. It will be understood that throughout this specification, the number and nature of optional substituents will be limited to the

extent that such substitutions satisfy chemical sense.

In this specification, the CIE1976 L*a*b* color system is defined by the CIE (International Commission on Illumination) and corresponds to the color space currently standardized globally.

In this CIE 1976 L*a*b* color space, the L* value represents brightness in color coordinates and ranges from 0 to 100, with a value of 0 meaning complete black and 100 meaning complete white. a* indicates whether the color is biased toward red or green, and if this value is positive, that is, "+", it is red; and if this value is negative, that is, "-", it is green. b* indicates whether the color is biased toward yellow or blue, and if this value is a positive, it is yellow; and if this value is negative, that is, "-", it is blue.

Based on the above definitions, embodiments of the present invention will be described in detail. However, these embodiments are exemplary, the present disclosure is not limited thereto and the present disclosure is defined by the scope of claims.

**(Polyester Resin)**

In an embodiment of the present invention, a polyester resin consisting of a copolymer of a monomer mixture including a furan dicarboxylic acid-based compound, an aliphatic diol-based compound, and a lactone-based compound is provided.

The furan dicarboxylic acid-based compound itself has excellent biodegradability, and the lactone-based compound is converted into a compound with excellent biodegradability through ring opening polymerization reaction, so that polyester resins manufactured using them as raw materials shows significantly excellent biodegradability.

Optionally, when preparing the polyester resin, the first oligomer may be prepared in the presence of a titanium (Ti)-based catalyst including a heat stabilizer. Accordingly, thermal discoloration can be minimized during the manufacturing process (particularly, poly-condensation) of each type of polyester resin.

Hereinafter, the polyester resin will be described in detail.

Furan dicarboxylic acid-based compound

The polyester resin includes a moiety derived from a furan dicarboxylic acid-based compound (hereinafter referred to as 'a furan dicarboxylic acid-based compound-derived moiety'), and exhibits excellent biodegradability due to the furan dicarboxylic acid-based compound.

The furan dicarboxylic acid-based compound may be represented by Chemical Formula 1:

[Chemical Formula 1]

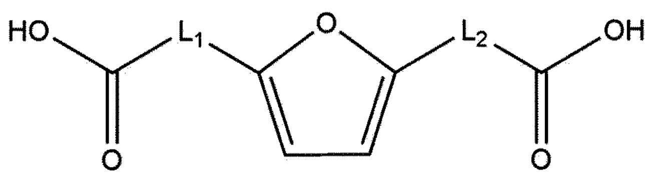

In Chemical Formula 1, $L_1$ and $L_2$ are each independently a single bond or a substituted or unsubstituted C1 to C10 alkylene.

For example, the furan dicarboxylic acid-based compound may be 2,5-furandicarboxylic acid, and in this case, both $L_1$ and $L_2$ of Chemical Formula 1 may be single bonds.

The furan dicarboxylic acid-based compound-derived moiety may be represented by Chemical Formula 1-1:

[Chemical Formula 1-1]

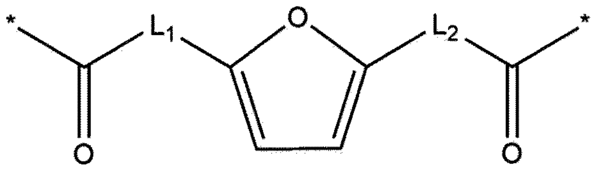

In Chemical Formula 1-1, $L_1$ and $L_2$ are each independently a single bond or a substituted or unsubstituted C1 to C10 alkylene; and * indicates a bonding position.

For example, when the furan dicarboxylic acid-based compound is 2,5-furan dicarboxylic acid, both $L_1$ and $L_2$ of Chemical Formula 1-1 may be single bonds.

Aliphatic diol-based compound

The polyester resin includes a moiety derived from an aliphatic diol-based compound (hereinafter referred to as 'aliphatic diol-based compound-derived moiety'), and has excellent compatibility and elongation due to the aliphatic diol-based compound-derived moiety.

The aliphatic diol-based compound may be represented by Chemical Formula 2:

[Chemical Formula 2]

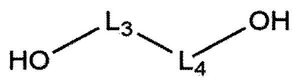

In Chemical Formula 2, $L_3$ and $L_4$ are each independently a substituted or unsubstituted $C_{1-10}$ alkylene.

For example, the aliphatic diol-based compound may be ethylene glycol or 1,4-butanediol. In this case, $L_3$ in Chemical Formula 2 may be C1 alkylene (i.e., methylene), and $R_4$ may be C1 alkylene (i.e., methylene) or C3 alkylene (i.e., propylene).

The aliphatic diol-based compound-derived moiety may be represented by Chemical Formula 2-1:

[Chemical Formula 2-1]

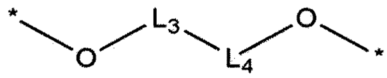

In Chemical Formula 2-1, $R_3$ and $R_4$ are each independently a substituted or unsubstituted $C_{1-10}$ alkylene; and * indicates a bonding position.

For example, when the aliphatic diol-based compound is ethylene glycol or 1,4-butanediol, in Chemical Formula 2-1, $R_3$ is C1 alkylene (i.e., methylene), and $R_4$ is C1 alkylene (i.e., methylene) or C3 alkyllene (i.e. propylene).

Lactone-based compound

The polyester resin contains a moiety derived from the lactone-based compound (hereinafter referred to as 'lactone-based compound-derived moiety'), and exhibits excellent biodegradability due to the lactone-based compound-derived moiety.

The lactone-based compound may be represented by Chemical Formula 3:

[Chemical Formula 3]

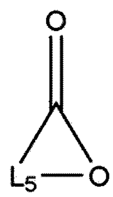

In Chemical Formula 3, $L_5$ is a substituted or unsubstituted $C_{1-10}$ alkylene.

For example, the lactone-based compound may be caprolactone. In this case, $L_5$ in Chemical Formula 3 may be C5 alkylene (i.e., pentylene).

The lactone-based compound-derived moiety may be represented by Chemical Formula 3-1:

[Chemical Formula 3-1]

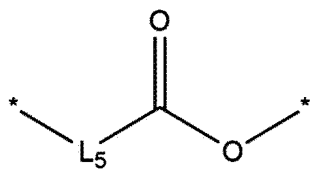

In Chemical Formula 3-1, $L_5$ is a substituted or unsubstituted $C_{1-10}$ alkylene; and * indicates a bonding position.
For example, when the lactone-based compound is caprolactone, $L_5$ in Chemical Formula 3-1 may be $C_5$ alkylene (i.e., pentylene).

Copolymer structure

The copolymer constituting the polyester resin may be a random copolymer or a block copolymer.
Specifically, the polyester resin may be a first type polyester resin, a second type polyester resin, or a third type polyester resin.

1) First type polyester resin: a block copolymer of a first oligomer and a second oligomer, wherein the first oligomer consists of a polymer of a furan dicarboxylic acid-based compound and a first aliphatic diol-based compound, the second oligomer consists of a polymer of a lactone-based compound and a second aliphatic diol-based compound
2) Second type polyester resin: a block copolymer of a first oligomer and a monomer, wherein the first oligomer consists of a polymer of a furan dicarboxylic acid-based compound and a first aliphatic diol-based compound, the monomer is a lactone-based compound
3) Third type polyester resin: a random copolymer of a furan dicarboxylic acid-based compound, an aliphatic diol-based compound, and a lactone-based compound, wherein the aliphatic diol-based compound includes a first aliphatic diol-based compound and a second aliphatic diol-based compound different therefrom

Although further details will be described later, the first type polyester resin may be prepared by subjecting an esterification reaction product (first oligomer) of the furan dicarboxylic acid-based compound and the first aliphatic diol-based compound and an esterification reaction product (second oligomer) of the lactone-based compound and the second aliphatic diol-based compound, to an esterification reaction, a pre-polymerization reaction, and a poly-condensation reaction.
In addition, the second type polyester resin may be prepared by subjecting an esterification reaction product (first oligomer) of the furan dicarboxylic acid-based compound and the first aliphatic diol-based compound and the lactone-based compound, to an esterification reaction, a pre-polymerization reaction, and a poly-condensation reaction.
In addition, the third type polyester resin may be prepared by subjecting a furan dicarboxylic acid-based compound, a first aliphatic diol-based compound, a second aliphatic diol-based compound, and a lactone-based compound to an esterification reaction, a pre-polymerization reaction, and a poly-condensation reaction.
Compared to the third type polyester resin, the first type polyester resin and the second type polyester resin are easier to control molecular weight and structural design, and have the advantage of controlling physical properties and color characteristics.
For example, the first type polyester resin may be represented by Chemical Formula 4-1 and the second type polyester resin may be represented by Chemical Formula 4-2:

[Chemical Formula 4-1]

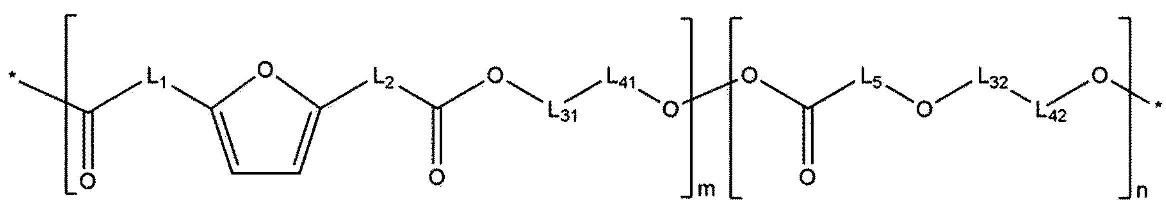

[Chemical Formula 4-2]

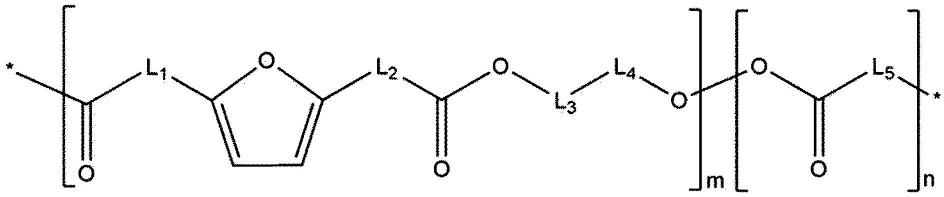

In Chemical Formulas 4-1 and 4-2, $L_1$ and $L_2$ are each independently a single bond or a substituted or unsubstituted C1 to C10 alkylene; $L_3$, $L_{31}$, $L_{32}$, $L_4$, $L_{41}$, and $L_{42}$ are each independently a substituted or unsubstituted $C_{1-10}$ alkylene; $L_5$ is a substituted or unsubstituted $C_{1-10}$ alkylene; m and n are each independently an integer ranging from 1 to 100, m:n is 1:10 to 10:1; and * indicates a bonding position.

The m:n may be 10:1 to 1:10, 8:1 to 1:8, 6:1 to 1:6, or 4:1 to 1:4.

Molar ratio

In the first and second type polyester resins, the first oligomer may be prepared by adjusting a molar ratio of the furan dicarboxylic acid-based compound and the first aliphatic diol-based compound at 5:1 to 1:10, 3:1 to 1:7, 1:1 to 1:3, or 1:2 to 1:2.5.

If the first aliphatic diol-based compound is used at greater than 10 parts by mole based on 1 part by mole of the furan dicarboxylic acid-based compound, an esterification reaction rate thereof may be lowered, or the physical properties and productivity of the final polyester resin may be reduced.

On the other hand, if the aliphatic diol-based compound is used at less than 1/5 parts by mole based on 1 part by mole of the furan dicarboxylic acid-based compound, unreacted components of the furan dicarboxylic acid-based compound remain excessively, and thus it is impossible to accurately confirm an end point of their esterification reaction. Accordingly, the esterification reaction may proceed for a long time, which may cause thermal discoloration of the final polyester resin or reduce the physical properties and brightness of the final polyester resin.

In the first type polyester resin, the second oligomer may be prepared by adjusting the lactone-based compound and the second aliphatic diol-based compound at a molar ratio of 5:1 to 1:10, 3:1 to 1:7, 1:1 to 1:3, or 1:2 to 1:2.5.

If the second aliphatic diol-based compound is used is used at greater than 10 parts by mole based on 1 part by mole of the lactone-based compound, an esterification reaction rate thereof may be lowered, or the physical properties and productivity of the final polyester resin may be reduced.

On the other hand, if the aliphatic diol-based compound is used at less than 1/5 parts by mole based on 1 part by mole of the lactone-based compound, unreacted components of the lactone-based compound remain excessively, and thus it is impossible to accurately confirm an end point of their esterification reaction. Accordingly, the esterification reaction may proceed for a long time, which may cause thermal discoloration of the final polyester resin or reduce the physical properties and brightness of the final polyester resin.

The first type polyester resin may be prepared by adjusting a molar ratio of the first oligomer and the second oligomer at 10:1 to 1:10, 8:1 to 1:8, 6:1 to 1:6, or 4:1 to 1:4.

In addition, the polyester resin of the second type may be prepared by adjusting a molar ratio of the first oligomer and the monomer (lactone-based compound) at 10:1 to 1:10, 8:1 to 1:8, and 6:1 to 1:6, or 4:1 to 1:4.

If the second oligomer or the monomer (lactone-based compound) is used at greater than 10 parts by moles based on 1 part by mole of the first oligomer, an esterification reaction rate thereof may be lowered, or the physical properties and productivity of the final polyester resin may be reduced.

On the other hand, if the second oligomer or the monomer (lactone-based compound) is used at less than 1/10 parts by mole based on 1 part by mole of the first oligomer, unreacted components of the first oligomer remain excessively, and thus it is impossible to accurately confirm an end point of their esterification reaction. Accordingly, the esterification reaction may proceed for a long time, which may cause thermal discoloration of the final polyester resin or reduce the physical properties and brightness of the final polyester resin.

Number average molecular weight (Mn) and molecular weight distribution (MWD) of polyester resin

The polyester resin has a number average molecular weight (Mn) of 50,000 to 200,000 g/mol, 60,000 to 180,000 g/mol, 70,000 to 150,000 g/mol, 80,000 to 130,000 g/mol, 90,000 to 110,000 g/mol, or 99,000 to 101,000 g/mol.

If the number average molecular weight of the polyester resin is less than 50,000 g/mol, not only is it difficult to process it into a film for use as a packaging material, but the desired modulus may not be achieved. On the other

hand, if it exceeds 200,000 g/mol, the viscosity may increase, resulting in lower productivity and yield.

The polyester resin has a ratio of weight average molecular weight (Mw)/number average molecular weight (Mn), that is, molecular weight distribution (MWD) of 1.0 to 3.0, specifically 1.1 to 2.5, more specifically 1.3 to 2.0, for example, 1.6 to 1.9.

If the molecular weight distribution of the polyester resin is less than 1.0, process control is difficult, the defect rate increases, and process costs increase. On the other hand, if the molecular weight distribution of the polyester resin of the above embodiment exceeds 3.0, defects may occur during product manufacturing due to non-uniform molecular weight distribution.

Color characteristics of polyester resin

The polyester resin may have an L* value of 93 or more, an a* value of 0 to 2, and a b* value of 7 or less according to the CIE1976 L*a*b* color system.

For example, the measurement method of the polyester resin colorimeter is as follows. 2 g of polyester resin sample is dissolved in 20 ml of hexafluoroisopropanol (HFIP) (0.1 g/ml in HFIP). Using Konica Minolta's CM-3700A product, the colorimeter of the sample solution in a Tuartz cell for solution colorimeter measurement is measured.

The higher the L* value, the closer the color to white can be displayed. However, depending on the use, purpose, etc. of the product to which the polyester resin of the embodiment is applied, the L* value is 93 or more, 94 or more, or 95 or more, and the brightness may be controlled within the range of 100 or less, 99 or less, or 98 or less.

Specifically, the L* value of the first type polyester resin may be smaller compared to the second type polyester resin, which is due to the fact that it is manufactured by further including the second aliphatic diol-based compound.

In the case of the a* value, the smaller the value, the lighter the red color and the darker the green color. However, depending on the use, purpose, etc. of the product to which the polyester resin of the embodiment is applied, the degrees of red and green can be controlled within the range of the a* value of 0 or more, 0.1 or more, 0.3 or more, 0.5 or more, or 0.7 or more, and is 2 or less, 1.8 or less, 1.7 or less, 1.5 or less, or 1.4 or less.

Specifically, the a* value of the first type polyester resin may be higher compared to the polyester resin, and this may be due to the fact that it is manufactured by further including the second aliphatic diol-based compound.

In the case of the b* value, as the value becomes smaller in the range of 7 or less, the yellow color becomes lighter and the blue color becomes darker. In particular, according to the Experimental Examples described later, the b* value of all comparative examples exceeds 7, while the b* value of all examples is 7 or less, suppressing thermal discoloration such as yellowing and browning during the manufacturing process.

However, depending on the use, purpose, etc. of the product to which the polyester resin is applied, the degree of yellow and blue can be controlled within the range of the b* value of 7 or less, 6.8 or less, 6.6 or less, or 6.4 or less, and is 0 or more, 1 or more, 2 or more, 3 or more, or 4 or more.

Specifically, the b* value of the first type polyester resin may be higher compared to the second type polyester resin, which is due to the fact that it is manufactured by further including the second aliphatic diol-based compound.

The color characteristics of the polyester resin of the above embodiment can be adjusted by the monomer reaction sequence during the manufacturing process, the amount of monomer used, etc.

Physical properties of polyester

The polyester resin has a change in intrinsic viscosity ($\triangle IV_{12}$) according to Equation 1 of 0.80 to 1.0, specifically 0.82 to 0.98 dl/g, more specifically 0.85 to 0.95 dl/g, for example 0.87 to 0.92 dl/g:

[Equation 1]

$$\triangle IV_{12} = IV_1 - IV_2$$

In Equation 1, $IV_1$ is an intrinsic viscosity at 25 °C, $IV_2$ is an intrinsic viscosity at 35 °C.

If the change in intrinsic viscosity ($\triangle IV_{12}$) according to Equation 1 is less than the lower limit, not only is it difficult to process it into a film for use as a packaging material, but the desired modulus may not be achieved. On the other hand, if the upper limit is exceeded, the viscosity may increase and productivity and yield may decrease.

In addition, the polyester resin may have an intrinsic viscosity at 25 °C of 1.0 to 2.5 dl/g, specifically 1.3 to 2.3 dl/g, more specifically 1.5 to 2.0 dl/g, for example 1.8 to 2.0 dl/g.

In addition, the polyester resin may have an intrinsic viscosity at 35 °C of 0.5 to 1.5 dl/g, specifically 0.7 to 1.3 dl/g, more specifically 0.9 to 1.1 dl/g, for example 1.0 to 1.1 dl/g.

If the intrinsic viscosity measured at each temperature is less than the lower limit, not only is it difficult to process

it into a film for use as a packaging material, but the desired modulus may not be achieved. On the other hand, if the upper limit is exceeded, the viscosity may increase and productivity and yield may decrease.

The polyester resin may have a glass transition temperature (Tg) of -60 to 10 °C, specifically -55 to 5 °C, for example, 50 to 1 °C.

If the glass transition temperature is less than -60 °C, it cannot have physical properties or thermal stability at room temperature, and there may be limitations in the film processing process of polyester resin for use as a packaging material. On the other hand, for the glass transition temperature to exceed 10 °C, the density of the molecular structure must be high, and in this case, the crystallinity of the polyester resin also increases, which may reduce transparency.

**(Method of manufacturing polyester resin)**

In another embodiment of the present invention, a method of manufacturing a polyester resin includes copolymerizing a monomer mixture including a furan dicarboxylic acid-based compound, an aliphatic diol-based compound, and a lactone-based compound.

Through this, a polyester resin with the aforementioned excellent characteristics can be obtained.

Raw material

When manufacturing the polyester resin, the furan dicarboxylic acid-based compound, the first aliphatic diol-based compound, the second aliphatic diol-based compound, and the lactone-based compound are used as raw materials. The description of the structure, etc. of each raw material is as described above.

Reaction sequence

An esterification reaction, a pre-polymerization reaction, and a poly-condensation reaction of the furan dicarboxylic acid-based compound, first aliphatic diol-based compound, second aliphatic diol-based compound and lactone-based compound may be included to prepare the third type polyester resin.

As previously pointed out, when a furan dicarboxylic acid-based compound is used alone as a diacid component, it is inevitable to obtain a yellowed or browned polyester resin. In addition, even when aromatic dicarboxylic acid and aliphatic dicarboxylic acid are mixed and reacted with a diol component, there are problems in that there is a limit to suppressing thermal discoloration and physical properties such as intrinsic viscosity are lowered.

The above problem can be solved through reaction sequence control.

Specifically, by esterifying a furan dicarboxylic acid-based compound and an aliphatic diol-based compound to prepare a first oligomer; esterifying a lactone-based compound and a second aliphatic diol-based compound to prepare a second oligomer; and subjecting the first oligomer and the second oligomer to an esterification reaction, a pre-polymerization reaction, and a poly-condensation reaction, the first type polyester resin is prepared.

Independently of this, by esterifying a furan dicarboxylic acid-based compound and an aliphatic diol-based compound to prepare a first oligomer; subjecting the first oligomer and the lactone-based compound monomer to an esterification reaction, a pre-polymerization reaction, and a poly-condensation reaction, the second type polyester resin is prepared.

Specifically, in the process of preparing the first oligomer, the oligomer may be controlled with respect to a size and a molecular weight to a level capable of avoiding thermal discoloration.

In this way, with the size and molecular weight of the oligomer controlled, if the first oligomer has sequential reactions (i.e., esterification reaction, pre-polymerization, and poly-condensation reaction) with the second oligomer or the lactone-based compound, the thermal discoloration may not only be suppressed, but also intrinsic viscosity may rapidly increase.

In short, if the furan dicarboxylic acid-based compound and the first aliphatic diol-based compound are first subjected to esterification reaction; and additionally reacted with the lactone-based compound monomer or its esterification reaction product with the second aliphatic diol-based compound, the yellowing or browning may not only be suppressed during the process of preparing the polyester resin, but also properties such as intrinsic viscosity, etc. of the polyester resin may be improved.

Furthermore, when each type of polyester resin above is prepared, the first oligomer may be prepared under the presence of a titanium (Ti)-based catalyst including a heat stabilizer. Accordingly, the thermal discoloration may be minimized during the process (particularly, poly-condensation) of preparing each type of polyester resin above.

First oligomer preparation step

When preparing each type of polyester resin, the furan dicarboxylic acid-based compound is first reacted with

the aliphatic diol-based compound to prepare a first oligomer with a low degree of polymerization.

Considering the amount of substances lost or unreacted during the esterification reaction of the furan dicarboxylic acid-based compound and the first aliphatic diol-based compound, the aliphatic diol-based compound may be used in excess of the desired copolymer composition.

Specifically, in the esterification reaction step of the furan dicarboxylic acid-based compound and the first aliphatic diol-based compound, based on 1 part by mole of the furan dicarboxylic acid-based compound, the first aliphatic diol-based compound may be reacted in an amount of 1/5 to 10 parts by mole, 1/3 to 7 parts by mole, 1 to 3 parts by mole, or 2 to 2.5 parts by mole.

If the first aliphatic diol-based compound is used at greater than 10 parts by mole based on 1 part by mole of the furan dicarboxylic acid-based compound, an esterification reaction rate thereof may be lowered, or the physical properties and productivity of the final polyester resin may be reduced.

On the other hand, if the first aliphatic diol-based compound is used at less than 1/5 parts by mole based on 1 part by mole of the furan dicarboxylic acid-based compound, unreacted components of the furan dicarboxylic acid-based compound remain excessively, and thus it is impossible to accurately confirm an end point of their esterification reaction. Accordingly, the esterification reaction may proceed for a long time, which may cause thermal discoloration of the final polyester resin or reduce the physical properties and brightness of the final polyester resin.

By esterification reaction of the furan dicarboxylic acid-based compound and the first aliphatic diol-based compound, a first oligomer including the furan dicarboxylic acid-based compound-derived moiety and first aliphatic diol-based compound-derived moiety can be produced.

In this process, the size and molecular weight of the first oligomer can be controlled to a level that avoids thermal discoloration. For example, when a first oligomer having a number average molecular weight of 1500 to 4000 g/mol is formed, heat damage to the molecules at high temperatures is prevented due to its size and molecular weight, and heat discoloration in subsequent steps can be avoided.

The esterification reaction of the furan dicarboxylic acid-based compound and the first aliphatic diol-based compound may be performed under a nitrogen ($N_2$) atmosphere.

In addition, the esterification reaction of the furan dicarboxylic acid-based compound and the first aliphatic diol-based compound may be performed at greater than or equal to 160 °C, greater than or equal to 170 °C, or greater than or equal to 180 °C and less than or equal to 260 °C, less than or equal to 240 °C, or less than or equal to 220 °C.

Furthermore, the esterification reaction of the furan dicarboxylic acid-based compound and the first aliphatic diol-based compound may be performed for greater than or equal to 1 hour, greater than or equal to 1.5 hours, or greater than or equal to 2 hours and less than or equal to 8 hours, less than or equal to 7 hours, or less than or equal to 6 hours.

If the esterification reaction temperature and time of the furan dicarboxylic acid-based compound and the first aliphatic diol-based compound are respectively less than the ranges, physical properties of the final polyester may be deteriorated due to a low reaction yield or an insufficient reaction. On the other hand, if the esterification reaction temperature, time, etc. of the furan dicarboxylic acid-based compound and the first aliphatic diol-based compound are respectively out of the ranges, as a depolymerization reaction progresses, the polyester resin may not be synthesized, or even the synthesized polyester appears yellow.

The esterification reaction (i.e., preparation of the first oligomer) of the furan dicarboxylic acid-based compound and the first aliphatic diol-based compound may be performed under the presence of the titanium (Ti)-based catalyst including a heat stabilizer. Accordingly, the thermal discoloration may be minimized during the preparing process (particularly, poly-condensation) of each type of the polyester resin above.

Second oligomer preparation step

When preparing the first type polyester resin, the second oligomer is prepared independently from the first oligomer. Specifically, the second oligomer is prepared to have a low polymerization degree by reacting a lactone-based compound and a second aliphatic diol-based compound.

Considering an amount of a material lost or unreacted during the esterification reaction of the lactone-based compound and the second aliphatic diol-based compound, the aliphatic diol-based compound may be used in excess compared with a desired copolymer composition.

Specifically, in the esterification reaction step of the lactone-based compound and the second aliphatic diol-based compound, the first aliphatic diol-based compound may be used in an amount of 1/5 to 10 parts by mole, 1/3 to 7 parts by mole, 1 to 3 parts by mole, or 2 to 2.5 parts by mole based on 1 part by mole of the lactone-based compound.

If greater than 10 parts by mole of the second aliphatic diol-based compound based on 1 part by mole of the lactone-based compound is used, because an oligomer thereof has a reduced molecular weight, discoloration may occur during the poly-condensation process conducted at a high temperature. Properties and color of a final polyester resin may be deteriorated.

On the other hand, if the second aliphatic diol-based compound is used in an amount of 1/5 parts by mole

based on 1 part by mole of the lactone-based compound, because unreacted components of the lactone-based compound excessively remains, it is impossible to accurately confirm an end point of their esterification reaction. Accordingly, the esterification reaction proceeds for a long time, which may cause thermal discoloration of the final polyester resin or deteriorate physical properties and brightness of the final polyester resin.

During the esterification reaction of the lactone-based compound and the second aliphatic diol-based compound, a ring opening polymerization reaction of the lactone-based compound may occur. As a result, the second oligomer containing a lactone-based compound-derived moiety and a second aliphatic diol-based compound-derived moiety may be prepared.

During this process, the second oligomer may be controlled with respect to a size and a molecular weight to a level of avoiding the thermal discoloration. For example, a second oligomer with a number average molecular weight of 1500 to 4000 g/mol may be prevented from thermal damage on molecules at a high temperature due to its size and molecular weight and thus free from thermal discoloration in subsequent steps.

The esterification reaction of the lactone-based compound and the second aliphatic diol-based compound may be performed under an nitrogen ($N_2$) atmosphere.

In addition, the esterification reaction of the lactone-based compound and the second aliphatic diol-based compound may be performed at greater than or equal to 160 °C, greater than or equal to 170 °C, or greater than or equal to 180 °C and less than or equal to 260 °C, less than or equal to 240 °C, or less than or equal to 220 °C.

Furthermore, the esterification reaction of the lactone-based compound and the second aliphatic diol-based compound may be performed for greater than or equal to 1 hour, greater than or equal to 1.5 hours, or greater than or equal to 2 hours and less than or equal to 8 hours, less than or equal to 7 hours, or less than or equal to 6 hours.

If the esterification reaction temperature, reaction time, etc. of the lactone-based compound and the second aliphatic diol-based compound are respectively less than the ranges, properties of the final polyester may be deteriorated due to a low reaction yield or an insufficient reaction. On the other hand, if the esterification reaction temperature, reaction time, etc. of the lactone-based compound and the second aliphatic diol-based compound are respectively out of the ranges, as a depolymerization reaction progresses, the polyester resin may not be synthesized, or even the synthesized polyester may highly possibly appear yellow.

The esterification reaction (i.e., preparation of the second oligomer) of the lactone-based compound and the second aliphatic diol-based compound may be performed under the presence of an antimony (Sb)-based catalyst. Accordingly, the thermal discoloration may be minimized during the preparing process (particularly, poly-condensation) of the second oligomer.

Reaction of second oligomer or lactone-based compound with the first oligomer

When preparing the first type polyester resin, the first oligomer and the second oligomer have sequential reactions (i.e., esterification reaction, pre-polymerization, and poly-condensation reaction).

On the other hand, when preparing the second type polyester resin, the first oligomer and the lactone-based compound have sequential reaction (i.e., esterification reaction, pre-polymerization and poly-condensation reaction).

Herein, based on 1 part by mole of the first oligomer, 1/10 to 10 parts by mole, 1/8 to 8 parts by mole, 1/6 to 6 parts by mole, or 1/4 to 4 parts by mole of the second oligomer or the lactone-based compound may be reacted.

If greater than10 parts by mole of the second oligomer or the lactone-based compound is used based on 1 part by mole of the first oligomer, an esterification reaction rate thereof may be lowered, or physical properties and productivity of the final polyester resin may be deteriorated.

On the contrary, if less than 1/10 parts by mole of the second oligomer or the lactone-based compound based on 1 part by mole of the first oligomer is used, because unreacted components of the first oligomer remain excessively, it is impossible to accurately confirm an end point of their esterification reaction. As a result, the esterification reaction proceeds for a long time, which may cause thermal discoloration of the final polyester resin or deteriorate physical properties and brightness of the final polyester resin.

When preparing the first type polyester resin, an aliphatic diol-based compound-derived moiety in the first oligomer; and a lactone-based compound-derived moiety in the second oligomer may be combined.

When preparing the second type polyester resin, a ring opening polymerization reaction of the lactone-based compound may occur. Accordingly, the aliphatic diol-based compound-derived moiety in the first oligomer and the lactone-based compound-derived moiety may be combined.

According to the reaction of the second oligomer or the lactone-based compound; and the first oligomer, a third oligomer may grow to have a larger size and a larger molecular weight than those of the first oligomer and the second oligomer. The third oligomer may have a number average molecular weight of 2,000 to 8,000 g/mol.

The esterification reaction of the second oligomer or the lactone-based compound; and the first oligomer may be performed under a nitrogen ($N_2$) atmosphere.

In addition, the esterification reaction of the second oligomer or the lactone-based compound; and the first

oligomer may be performed at greater than or equal to 160 °C, greater than or equal to 170 °C, or greater than or equal to 180 °C and less than or equal to 260 °C, less than or equal to 240 °C, or less than or equal to 220 °C.

Furthermore, the esterification reaction of the second oligomer or the lactone-based compound; and the first oligomer may be performed for greater than or equal to 1 hour, greater than or equal to 1.5 hours, or greater than or equal to 2 hours and less than or equal to 8 hours, less than or equal to 7 hours, or less than or equal to 6 hours.

If the esterification reaction temperature, reaction time, etc. of the second oligomer or the lactone-based compound; and the first oligomer are respectively less than the ranges, physical properties of the final polyester may be deteriorated due to a low reaction yield or an insufficient reaction. On the other hand, if the esterification reaction temperature, reaction time, etc. of the second oligomer or lactone-based compound; and the first oligomer are respectively out of the ranges, because a depolymerization reaction occurs, the polyester resin may not be synthesized, or even the synthesized polyester may highly possibly appear yellow.

On the other hand, the esterification reaction of the second oligomer or the lactone-based compound; and the first oligomer may be performed under the presence of the esterification reaction catalyst including a titanium (Ti)-based compound. In particular, the esterification reaction catalyst may be added to the esterification reaction of the second oligomer or the lactone-based compound; and the first oligomer to improve a reaction speed from the beginning of the reaction and shorten exposure time of the polyester resin to heat.

The titanium (Ti)-based compound may, for example, titanium oxide, titanium butoxide, titanium alkoxide, titanium chelate, or a mixture thereof.

The esterification reaction catalyst may be used in an amount of 1 ppm to 100 ppm based on central metal atoms of the synthesized polyester. If the content of the esterification reaction catalyst is too small, efficiency of the esterification reaction may not be greatly improved, and an amount of a reactant not participating in the reaction may be greatly increased. In addition, if the content of the esterification reaction catalyst is too large, appearance properties of the polyester may be deteriorated. Furthermore, if the content of the esterification reaction catalyst is too large, the synthesized polyester may become yellow, deteriorating appearance properties.

When preparing each type of polyester resin, after an esterification reaction of the second oligomer or lactone-based compound and the first oligomer, a polymer with a higher degree of polymerization is prepared through pre-polymerization.

A heat stabilizer can be used in the pre-polymerization process, and by using this, thermal discoloration can be minimized not only during the pre-polymerization process but also during the subsequent poly-condensation reaction.

Specifically, the heat stabilizer may include at least one selected from the group of phosphorus-based heat stabilizers including trimethyl phosphonoacetate, triethyl phosphonoacetate, phosphoric acid, phosphorous acid, polyphosphoric acid, trimethylphosphate (TMP), triethyl phosphate, trimethyl phosphine, triphenylphosphine.

For example, the heat stabilizer can be added in an amount approximately twice that of the esterification reaction catalyst. When the heat stabilizer is used in the above range, thermal discoloration during the pre-polymerization and poly-condensation reactions can be minimized.

The pre-polymerization may be performed under temperature-controlled conditions (thermal pre-condensation).

Specifically, the pre-polymerization may include raising a temperature until it reaches a temperature range of 220 to 260 °C; and maintaining the achieved temperature and pre-polymerizing the second esterification reaction product.

In addition, when the temperature is increased, the pressure can be reduced until it reaches 0 to 0.3 atm, and then the achieved pressure can also be maintained when the achieved temperature is maintained.

The pre-polymerization is a step of changing from a normal pressure to vacuum before proceeding to a poly-condensation reaction (vacuum) to be described later, which will be a step of gradually changing from the normal pressure (1 atm) to the vacuum (0 atm). If the pre-polymerization is omitted, the second esterification reaction product is volatilized during the process of rapidly changing to the vacuum, causing a dolby phenomenon and thereby, reducing a yield of the final polyester resin and adversely affecting its physical properties.

When preparing each type of polyester resin above, after the esterification reaction and the pre-polymerization reaction of the second oligomer or the lactone-based compound; and the first oligomer, the prepolymerized polymer is subjected to a poly-condensation reaction.

The poly-condensation reaction may be performed under a vacuum atmosphere at 220 to 300 °C under a pressure of 0.8 to 0.4 torr for 2 to 6 hours.

The poly-condensation reaction may proceed in a higher vacuum state than 0 atm. A degree of the vacuum state is measured with a vacuum gauge, and in general, the polymerization proceeds within a range of 0.8 to 0.4 torr.

During the poly-condensation, a poly-condensation reaction catalyst can be used.

The poly-condensation catalyst may be added to the product of the esterification reaction before the start of the poly-condensation reaction, may be added to a mixture including the diol component and the dicarboxylic acid component before the esterification reaction, and may also be added during the esterification reaction step.

As the poly-condensation catalyst, titanium-based compound, germanium-based compound, antimony-based compound, aluminum-based compound, tin-based compound or mixture thereof can be used.

The titanium-based compound may include tetraethyl titanate, acetyltripropyl titanate, tetrapropyl titanate, tetrabutyl titanate, polybutyl titanate, 2-ethylhexyl titanate, octylene glycol titanate, lactate titanate, triethanolamine titanate, acetylacetonate titanate, ethyl acetoacetic ester titanate, isostearyl titanate, titanium dioxide, a titanium dioxide/silicon dioxide copolymer, a titanium dioxide/zirconium dioxide copolymer, etc.

The germanium-based compounds may include germanium dioxide ($GeO_2$), germanium tetrachloride ($GeCl_4$), germanium ethyleneglycoxide, germanium acetate, copolymers using these, and mixtures thereof. etc.

## DETAILED DESCRIPTION OF THE EMBODIMENTS

Hereinafter, the present invention will be described with reference to examples. However, the following examples are intended to illustrate the present invention, and the scope of the present invention is not limited to these only.

**[Examples 1-1 to 1-5: First type polyester resin]**

### Example 1-1

In a first Autoclave reactor hopper with a capacity 10 L, 1 mol of 2,5-furan dicarboxylic acid (FDCA) and 2 to 2.5 mol of 1,4-butanediol (1,4-BDO) are added. Subsequently, tetra(2,2-diallyloxymethyl-1-butyl)bis(ditridecyl) phosphite titanate (Product name: Plenact-55, Manufacturer: AJINOMOTO FINE TECHNO), which is a type of titanium (Ti)-based catalyst containing a heat stabilizer, is added in an amount of 50 ppm based on Ti thereto at 190 °C under a nitrogen atmosphere for 2 to 3 hours to perform an esterification reaction of the FDCA and 1,4-BDO. According to this reaction, a first oligomer consisting of a FDCA-derived moiety and a 1,4-BDO-derived moiety is produced.

Independently of this, in a second Autoclave reactor hopper with a capacity 10 L, 1 mol of caprolactone (CL) and ethylene glycol (EG) are added. Subsequently, antimony acetate, which is a type of antimony (Sb)-based catalyst, is added in an amount of 50 ppm based on Sb thereto to perform an esterification reaction of the CL and EG at 190 °C under a nitrogen atmosphere for 2 to 3 hours. According to this reaction, a second oligomer consisting of a CL-derived moiety and an EG-derived moiety is produced.

When the production reaction of the first oligomer and the second oligomer are completed, in a third Autoclave reactor with a capacity 10 L, the second oligomer is added. Herein, the input amount of the second oligomer is shown in Table 1.

An esterification reaction of the first oligomer and the second oligomer is performed at 190 °C under a nitrogen atmosphere for 1 hour.

If no additional effluent generated through the esterification reaction of the first oligomer and the second oligomer is produced, the esterification reaction is terminated. After completion of the reaction, titanium tert-butoxide, which is a tin alkoxide-based catalyst, in an amount of 100 ppm based on tin is added thereto as a poly-condensation catalyst, and triethyl phosphonoacetate as a heat stabilizer in an amount of 200 ppm, twice as much as the poly-condensation catalyst, is added thereto. After adding the poly-condensation catalyst and the heat stabilizer, pre-polymerization is performed by stirring the mixture for 30 minutes, increasing a temperature inside the reactor within a range of 220 to 240 °C, gradually lowering a pressure for 1 hour with a vacuum pump until the internal pressure of the reactor reaches 0 atm from 1 atm.

Subsequently, while the reaction proceeds within a temperature range of 220 to 240 °C under a high vacuum of 0.8 torr or less for 2 hours to 6 hours, when a load transmitted to a torque meter of an autoclave reaches a desired level, a polyester resin of Example 1-1 is obtained by draining.

### Example 1-2 to Example 1-5

Each polyester resin of Examples 1-2 to 1-5 is prepared in the same manner as in Example 1-1 except that each input amount of the first oligomer and the second oligomer is changed as shown in Table 1.

(Table 1)

| | First oligomer | Second oligomer | Final copolymer structure |
|---|---|---|---|
| Example 1-1 | 4.03 mol | 1.34 mol | block copolymer |
| Example 1-2 | 3.78 mol | 1.89 mol | block copolymer |
| Example 1-3 | 3.08 mol | 3.08 mol | block copolymer |
| Example 1-4 | 2.3 mol | 4.61 mol | block copolymer |

(continued)

| | First oligomer | Second oligomer | Final copolymer structure |
|---|---|---|---|
| Example 1-5 | 1.81 mol | 5.43 mol | block copolymer |

**[Examples 2-1 to 2-5: Second type polyester resin]**

**Example 2-1**

Each polyester resin of Examples 2-1 to 2-5 is prepared in the same manner as in Example 1-1 except that the second oligomer is changed to caprolactone (CL). Herein, an input amount of the caprolactone is as shown in Table 2.

(Table 2)

| | First oligomer | Caprolactone | Final copolymer structure |
|---|---|---|---|
| Example 2-1 | 4.03 mol | 1.34 mol | block copolymer |
| Example 2-2 | 3.78 mol | 1.89 mol | block copolymer |
| Example 2-3 | 3.08 mol | 3.08 mol | block copolymer |
| Example 2-4 | 2.3 mol | 4.61 mol | block copolymer |
| Example 2-5 | 1.81 mol | 5.43 mol | block copolymer |

**Example 3-1 (FDCA + 1,4-BDO + CL + EG)**

4.03 mol of 2,5-furan dicarboxylic acid (FDCA), 10.08 mol of 1,4-butanediol (1,4-BDO), 1.34 mol of caprolactone (CL), and 0.175 mol of ethylene glycol (EG) are added to a first Autoclave reactor with a capacity of 2 L. Subsequently, dibutyl tin oxide, which is a type of tin-based catalyst, in an amount of 50 ppm based on tin is added thereto to proceed with an esterification reaction of the FDCA, 1,4-BDO, caprolactone, and EG at 190 °C under a nitrogen atmosphere for 2 to 3 hours. According to this reaction, an oligomer consisting of a FDCA-derived moiety, an 1,4-BDO-derived moiety, a CL-derived moiety, and an EG-derived moiety is produced.

After completing the esterification reaction, titanium tert-butoxide, which is a type of tin alkoxide-based catalyst, in an amount of 100 ppm based on tin is added as a poly-condensation catalyst thereto, and triethyl phosphonoacetate as a heat stabilizer is added thereto in an amount of 200 ppm, which is twice as much as the poly-condensation catalyst. After adding the poly-condensation catalyst and the heat stabilizer, pre-polymerization proceeds by stirring the mixture for 30 minutes, increasing an internal temperature of the reactor for 1 hour to reach a temperature range of 220 to 240 °C, gradually lowering a pressure for 1 hour with a vacuum pump to reach the internal pressure of the reactor to 0 atm from 1 atm.

Subsequently, while the reaction proceeds within a temperature range of 220 to 240 °C under a high vacuum pressure of 0.8 torr or less for 2 hours to 6 hours, when a load transmitted to a torque meter of an autoclave reached a desired level, a polyester resin of Example 3-1 is obtained by draining.

**Example 3-2 (FDCA + 1,4-BDO + CL + EG)**

A polyester resin is obtained in the same manner as in Example 3-1 except that the input amounts of the raw materials are changed to a composition shown in Table 3.

**Example 3-3 (FDCA + 1,4-BDO + CL + EG)**

A polyester resin is obtained in the same manner as in Example 3-1 except that the input amounts of the raw materials are changed to a composition shown in Table 3.

**Example 3-4 (FDCA + 1,4-BDO + CL + EG)**

A polyester resin is obtained in the same manner as in Example 3-1 except that the input amounts of the raw materials are changed to a composition shown in Table 3.

**Example 3-5 (FDCA + 1,4-BDO + CL + EG)**

A polyester resin is obtained in the same manner as in Example 3-1 except that the input amounts of the raw materials are changed to a composition shown in Table 3.

(Table 3)

| | FDCA | 1,4-BDO | CL | EG | Final copolymer structure |
|---|---|---|---|---|---|
| Example 3-1 | 4.03 mol | 10.08 mol | 1.34 mol | 0.027 mol | random copolymer |
| Example 3-2 | 3.78 mol | 9.45 mol | 1.89 mol | 0.038 mol | random copolymer |
| Example 3-3 | 3.08 mol | 7.7 mol | 3.08 mol | 0.062 mol | random copolymer |
| Example 3-4 | 2.3 mol | 5.75 mol | 4.61 mol | 0.092 mol | random copolymer |
| Example 3-5 | 1.81 mol | 4.53 mol | 5.43 mol | 0.11 mol | random copolymer |

**[Comparative Examples]**

**Comparative Example 1-1 (FDCA + 1,4-BDO)**

In a first Autoclave reactor with a capacity of 10 L, 4.75 mol of 2,5-furan dicarboxylic acid (FDCA), and 11.89 mol of 1,4-butanediol (1,4-BDO) are added. Subsequently, dibutyl tin oxide, which is a tin-based catalyst, in an amount of 50 ppm based on tin is added thereto to perform an esterification reaction of the FDCA and 1,4-BDO at 190 °C under a nitrogen atmosphere for 2 to 3 hours. According to this reaction, an oligomer consisting of a FDCA-derived moiety and an 1,4-BDO-derived moiety is produced.

After completing with the esterification reaction, titanium tert-butoxide, which is a type of tin alkoxide-based catalyst, in an amount of 100 ppm based on tin is added thereto as a poly-condensation catalyst, and triethyl phosphonoacetate as a heat stabilizer is added thereto in an amount of 200 ppm, which is twice as much as the poly-condensation catalyst. After adding the poly-condensation catalyst and the heat stabilizer, pre-polymerization proceeds by stirring the mixture for 30 minutes, increasing an internal temperature of the reactor for 1 hour to reach a temperature range of 220 to 240 °C, gradually lowering a pressure for 1 hour with a vacuum pump until the internal pressure of the reactor reaches 0 atm from 1 atm.

Subsequently, while the reaction proceeds within a temperature range of 220 to 240 °C under a high vacuum temperature of 0.8 torr or less for 2 hours to 6 hours, when a load transmitted to a torque meter of an autoclave reaches a desired level, a polyester resin of Comparative Example 1 is obtained by draining.

**Comparative Example 1-2 (CL + EG)**

In a first Autoclave reactor with capacity of 2 L, 8.76 mol of caprolactone (CL) and 0.175 mol of ethylene glycol (EG) are added. Subsequently, dibutyl tin oxide, a type of tin-based catalyst, is added in an amount of 50 ppm based on tin thereto to perform an esterification reaction of the FDCA and 1 ,4-BDO at 190 °C under a nitrogen atmosphere for 2 to 3 hours. According to this reaction, an oligomer consisting of a CL-derived moiety and an EG-derived moiety is produced.

After completing the esterification reaction, titanium tert-butoxide, a type of tin Alkoxide-based catalyst, in an amount of 100 ppm based on tin is added thereto as a poly-condensation catalyst, and triethyl phosphonoacetate as a heat stabilizer is added in an amount of 200 ppm, which is twice as much as the poly-condensation catalyst. After adding the poly-condensation catalyst and the heat stabilizer, pre-polymerization proceeds by stirring the mixture for 30 minutes, increasing an internal temperature of the reactor for 1 hour to reach a temperature range of 220 to 240 °C, gradually lowering a pressure with a vacuum pump for 1 hour until the internal pressure of the reactor reaches 0 atm from 1 atm.

Subsequently, while the reaction proceeds within a temperature range of 220 to 240 °C under a high vacuum of 0.8 torr or less for 2 hours to 6 hours, when a load transmitted to a torque meter of an autoclave reaches a desired level, a polyester resin of Comparative Example 2 is obtained by draining.

(Table 4)

| | FDCA | 1,4-BDO | CL | EG | Final copolymer structure |
|---|---|---|---|---|---|
| Comparative Example 1-1 | 4.75 mol | 11.89 mol | - | - | - |

(continued)

| | FDCA | 1,4-BDO | CL | EG | Final copolymer structure |
|---|---|---|---|---|---|
| Comparative Example 1-2 | - | - | 8.76 mol | 0.175 mol | - |

**Experimental Example 1: Weight, color, and physical properties of polyester resin**

Each of the polyester resin samples is evaluated with respect to a weight, a color, and physical properties in the following methods, and the results are shown in Tables 5 to 7.

1) Number Average Molecular Weight (Mn) and Molecular Weight Distribution (MWD) of Polyester Resin: Mw and Mn are measured by using gel permeation chromatography (GPC) to obtain a molecular weight distribution ("Mw/Mn").

Specifically, TSK gel guard column Super AW-H + 2 x TSK gel Super AWM-H (6.0 x 150 mm) column and HLC-8420 GPC made by Tosoh Company are used. Herein, the measurement is performed at 40 °C by using HFIP + 0.01 N NaTFA as a developing solvent at a flow rate of 0.3 mL/min.

Specifically, each of the polyester resin samples is prepared at a concentration of 3 mg/10 mL and then, supplied in an amount of 10 $\mu$L. The Mw and Mn are derived from a black curve formed by using a PMMA standard to obtain the molecular weight distribution ("Mw/Mn").

2) Color Characteristics: L*, a*, and b* values are measured under the following conditions by using a chip colorimeter made by Nippon Denshoku Corp. (sa-4000).

Specifically, 2 g of each of the polyester resins is dissolved in 20 ml of hexafluoroisopropanol (HFIP) (0.1 g/ml in HFIP). The sample solution is measured with respect to colorimeter in a Tuartz cell dedicated for measuring the colorimeter by using CM-3700A made by Konica Minolta Sensing Inc.

3) Intrinsic Viscosity (IV): 0.5 g of each of the polyester resins is dissolved 10 ml of a solvent of phenol:tetrachloroethane 1:1 (v:v) and then, measured with respect to IV respectively at 25 °C and 35 °C by using an Oswald viscometer.

4) Glass Transition Temperature (Tg): measured under $N_2$ at 20 psi, from room temperature to -300 °C at 20 °C/min by using DSC made by TA Instruments.

(Table 5)

| | Mn (g/mol) | MWD |
|---|---|---|
| Example 1-1 | 100,000 | 1.9 |
| Example 1-2 | 100,000 | 1.8 |
| Example 1-3 | 100,000 | 1.6 |
| Example 1-4 | 100,000 | 1.6 |
| Example 1-5 | 100,000 | 1.7 |
| Example 2-1 | 100,000 | 1.9 |
| Example 2-2 | 100,000 | 1.8 |
| Example 2-3 | 99,000 | 1.6 |
| Example 2-4 | 101,000 | 1.6 |
| Example 2-5 | 100,000 | 1.7 |
| Comparative Example 1-1 | 25,000 | 2.3 |
| Comparative Example 1-2 | 37,000 | 2.1 |
| Example 3-1 | 98,000 | 2.1 |
| Example 3-2 | 100,000 | 2.2 |
| Example 3-3 | 100,000 | 2.3 |
| Example 3-4 | 99,000 | 1.9 |

(continued)

| | Mn (g/mol) | MWD |
|---|---|---|
| Example 3-5 | 98,000 | 2.0 |

Referring to Table 5, the polyester resins of the examples exhibit Mn of 99,000 to 101,000 g/mol and MWD of 1.6 to 1.9.

On the other hand, the polyester resins of Examples 1-1 to 1-5 and 2-1 to 2-5, compared with the polyester resins of Examples 3-1 to 3-5 in which all raw materials (FDCA, 1,4-BDO, CL, and EG) are reacted, exhibit similar Mn but reduced MWD.

The polyester resins of the examples may be controlled with respect to Mn and MWD by adjusting types and input amounts of raw materials.

(Table 6)

| | L* | a* | b* |
|---|---|---|---|
| Comparative Example 2-1 | 96.1 | 1.02 | 6.4 |
| Comparative Example 2-2 | 95.1 | 1.3 | 5.9 |
| Example 1-1 | 95.3 | 1.3 | 4.8 |
| Example 1-2 | 95.6 | 1.2 | 5.1 |
| Example 1-3 | 97.1 | 1.5 | 5.3 |
| Example 1-4 | 96.1 | 1.02 | 6.4 |
| Example 1-5 | 95.1 | 1.3 | 5.9 |
| Example 2-1 | 97.2 | 0.89 | 4.1 |
| Example 2-2 | 97.4 | 0.94 | 4.3 |
| Example 2-3 | 96.9 | 0.82 | 3.9 |
| Example 2-4 | 97.8 | 0.91 | 4.4 |
| Example 2-5 | 97.1 | 0.79 | 4.3 |
| Comparative Example 1-1 | 97.1 | 1.2 | 6.5 |
| Comparative Example 1-2 | 96.1 | 1.9 | 9.8 |
| Example 3-1 | 95.1 | 2.0 | 11.2 |
| Example 3-2 | 95.9 | 2.3 | 9.3 |
| Example 3-3 | 94.8 | 2.2 | 10.1 |
| Example 3-4 | 95.0 | 2.1 | 10.6 |
| Example 3-5 | 95.3 | 2.3 | 9.8 |

Referring to Table 6, the polyester resins of the examples have L* of 95.1 to 97.8, a* of 0.79 to 1.3, and b* of 4.3 to 6.4 according to CIE1976 L*a*b* color system.

In particular, the polyester resins of Examples 1-1 to 1-5 and 2-1 to 2-5 exhibit lower b* according to the CIE1976 L*a*b* color system than Comparative Examples 1-1 and 1-2, which is due to controlling types of moieties (monomers) in the final resins.

Furthermore, the polyester resins of Examples 1-1 to 1-5 and 2-1 to 2-5 exhibit lower b* according to the CIE1976 L*a*b* color system than Examples 3-1 to 3-5, which is due to formation of a block copolymer.

The polyester resins of the examples may be controlled with respect to L*, a*, and b* according to the CIE1976 L*a*b* color system by adjusting types and amounts of the raw materials.

On the other hand, the first type polyester resins (Examples 1-1 to 1-5) exhibit smaller L* but larger a* and b* than the second type polyester resins (Examples 2-1 to 2-5). This may be due to further addition of the second aliphatic diol-based compound.

(Table 7)

| | $IV_1$ @25 °C (dl/g) | $IV_2$ @ 35 °C (dl/g) | $\Delta IV_{12}$ (dl/g) ($IV_1$ @25 °C-$IV_2$ @35 °C) | Tg (°C) |
|---|---|---|---|---|
| Example 1-1 | 1.91 | 1.02 | 0.89 | 0.5 |
| Example 1-2 | 1.92 | 1.03 | 0.89 | -7.6 |
| Example 1-3 | 1.89 | 1.01 | 0.88 | -24.9 |
| Example 1-4 | 1.93 | 1.03 | 0.9 | -35.1 |
| Example 1-5 | 1.90 | 1.02 | 0.88 | -46.1 |
| Example 2-1 | 1.90 | 1.02 | 0.88 | 0.48 |
| Example 2-2 | 1.94 | 1.03 | 0.91 | -7.3 |
| Example 2-3 | 1.88 | 1.01 | 0.87 | -25.1 |
| Example 2-4 | 1.95 | 1.03 | 0.92 | -36.1 |
| Example 2-5 | 1.93 | 1.02 | 0.91 | -45.9 |
| Comparative Example 1-1 | 0.65 | 0.51 | 0.14 | 41 |
| Comparative Example 1-2 | 1.1 | 0.69 | 0.41 | -52.9 |
| Example 3-1 | 1.87 | 1 | 0.87 | 0.5 |
| Example 3-2 | 1.89 | 1.014 | 0.876 | -6.9 |
| Example 3-3 | 1.9 | 1.018 | 0.882 | -24.8 |
| Example 3-4 | 1.88 | 1.01 | 0.87 | -35.1 |
| Example 3-5 | 1.87 | 1.006 | 0.864 | -46.3 |

Referring to Table 7, the polyester resins of the examples exhibit an intrinsic viscosity change ($\Delta IV_{12} = IV_1 - IV_2$) of 0.87 to 0.92 according to Equation 1, intrinsic viscosity of 1.88 to 1.95 dl/g at 25 °C, and intrinsic viscosity of 1.01 to 1.03 dl/g at 35 °C. In addition, the polyester resins of the examples have a glass transition temperature of -46.1 to 0.5 °C.

These polyester resins of the examples may be controlled with respect to intrinsic viscosity and a glass transition temperature by adjusting types and input amounts of the raw materials.

**Experimental Example 2: Physical properties of film including polyester resin**

Each of the polyester resins is formed into a film and then, evaluated with respect to properties, and the results are shown in Table 8.

Transmittance: Each of the polyester resins is formed into a biaxially stretched film. Specifically, the polyester resin sample is melted at 180 to 260 °C in an extruder.

The melt is extruded through a die and molded into a sheet and then, rapidly cooled. Accordingly, the obtained sheet is 3 times stretched in a machine direction (MD) and 3.7 times stretched in a transverse direction (TD). The stretched film is thermally fixed at 120 to 160 °C under tension to obtain the biaxially stretched film.

The prepared polyester film is cut into a size of 10 cm X 10 cm (vertical direction length X horizontal length) to prepare a specimen. The specimen is measured with respect to parallel transmittance and diffusion transmittance in a ASTM D1003-97 measurement method by using CM-3600A made by Minolta Co., Ltd. Herein, the transmittance is defined by combining the parallel transmittance and the diffusion transmittance. Accordingly, the parallel transmittance and the diffusion transmittance of the specimen are combined to obtain the transmittance.

2) Modulus, Tensile Strength, and Elongation: each of the polyester resin specimens is prepared into an ASTM D638-V type specimen by using a Microcompounder extruder at an extrusion temperature of 120 °C to 160 °C at a screw speed of 100 to 120 rpm.

The prepared polyester resin specimen is mounted in a LD direction by using a Vice grip under a universal testing machine UTM 5566A (Instron). The specimen is stretched at 5 mm/min at room temperature until it is broken to measure strength at which the specimen is broken, and this strength is given as the tensile strength, a stretched length is given as the elongation, and a slope of the load to initial deformation is given as the tensile modulus.

(Table 8)

| | Transmittance (%) | Tensile Modulus (MPa) | Tensile strength (MPa) | Elongation (%) |
|---|---|---|---|---|
| Example 1-1 | 88.91 | 159 | 17.1 | 361 |
| Example 1-2 | 88.45 | 141 | 23.8 | 470 |
| Example 1-3 | 88.12 | 131 | 41.1 | 630 |
| Example 1-4 | 89.01 | 116 | 45 | 711 |
| Example 1-5 | 89.03 | 110 | 51 | 810 |
| Example 2-1 | 89.11 | 159 | 16.1 | 380 |
| Example 2-2 | 89.25 | 141 | 22 | 510 |
| Example 2-3 | 88.82 | 131 | 43 | 655 |
| Example 2-4 | 89.11 | 116 | 51 | 720 |
| Example 2-5 | 89.23 | 110 | 60 | 830 |
| Comparative Example 1-1 | 89.03 | 959 | 1055 | 32 |
| Comparative Example 1-2 | 88.01 | 440 | 34 | 461 |
| Example 3-1 | 87.01 | 159 | 16.1 | 380 |
| Example 3-2 | 87.35 | 141 | 22 | 510 |
| Example 3-3 | 86.9 | 131 | 43 | 655 |
| Example 3-4 | 87.0 | 116 | 51 | 720 |
| Example 3-5 | 87.81 | 110 | 60 | 830 |

Referring to Table 8, the films formed by using the polyester resins of the examples exhibit transmittance of 88.12 to 89.25 %, tensile modulus of 110 to 159 MPa, tensile strength of 16.1 to 60 MPa, and elongation of 361 to 830%. The polyester resins of the examples may be controlled with respect to transmittance, tensile modulus, tensile strength, and elongation by adjusting types and input amounts of the raw materials.

While this invention has been described in connection with what is presently considered to be practical example embodiments, it is to be understood that the invention is not limited to the disclosed embodiments, but, on the contrary, is intended to cover various modifications and equivalent arrangements included within the spirit and scope of the appended claims.

## Claims

1. A polyester resin consisting of a copolymer of a monomer mixture including a furan dicarboxylic acid-based compound, an aliphatic diol-based compound, and a lactone-based compound.

2. The polyester resin of claim 1, wherein

the furan dicarboxylic acid-based compound is represented by Chemical Formula 1:

[Chemical Formula 1]

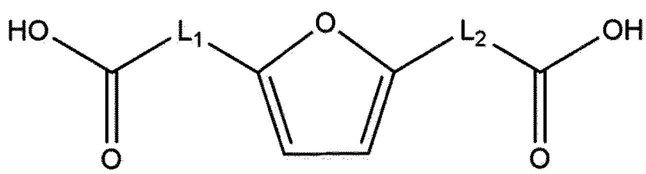

wherein, in Chemical Formula 1,
$L_1$ and $L_2$ are each independently a single bond or a substituted or unsubstituted C1 to C10 alkylene.

**3.** The polyester resin of claim 1, wherein

the aliphatic diol-based compound is represented by Chemical Formula 2:

[Chemical Formula 2]

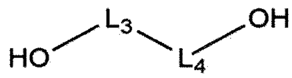

wherein, in Chemical Formula 2,
$L_3$ and $L_4$ are each independently a substituted or unsubstituted $C_{1-10}$ alkylene.

**4.** The polyester resin of claim 1, wherein

the lactone-based compound is represented by Chemical Formula 3:

[Chemical Formula 3]

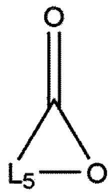

wherein, in Chemical Formula 3,
$L_5$ is a substituted or unsubstituted $C_{1-10}$ alkylene.

**5.** The polyester resin of claim 1, wherein

the polyester resin has
a number average molecular weight (Mn) of 50,000 to 200,000 g/mol.

**6.** The polyester resin of claim 1, wherein

the polyester resin has
a molecular weight distribution (MWD) of 1.0 to 3.0.

**7.** The polyester resin of claim 1, wherein

the polyester resin has
an L* value of 93 or more, an a* value of 0 to 2, and a b* value is 7 or less according to the CIE1976 L*a*b* color system.

**8.** The polyester resin of claim 1, wherein

the polyester resin has
a change in intrinsic viscosity ($\triangle IV_{12}$) according to Equation 1 is 0.80 to 1.0:

[Equation 1]

$$\triangle IV_{12} = IV_1 - IV_2$$

wherein, in Equation 1,
$IV_1$ is an intrinsic viscosity at 25 °C and $IV_2$ is an intrinsic viscosity at 35 °C.

**9.** The polyester resin of claim 1, wherein

the polyester resin has
a glass transition temperature (Tg) of -60 to 10 °C.

**10.** The polyester resin of claim 1, wherein
the copolymer is a random copolymer or a block copolymer.

**11.** The polyester resin of claim 10, wherein

the block copolymer is a block copolymer of a first oligomer and a second oligomer,
the first oligomer consists of a polymer of a furan dicarboxylic acid-based compound and a first aliphatic diol-based compound, and
the second oligomer consists of a polymer of a lactone-based compound and a second aliphatic diol-based compound.

**12.** The polyester resin of claim 10, wherein

the block copolymer is a block copolymer of a first oligomer and a monomer,
the first oligomer consists of a polymer of a furan dicarboxylic acid-based compound and a first aliphatic diol-based compound, and
the monomer is a lactone-based compound.

**13.** The polyester resin of claim 11 or claim 12, wherein
in the first oligomer, a molar ratio of the furan dicarboxylic acid-based compound and the first aliphatic diol-based compound is 5:1 to 1:10.

**14.** The polyester resin of claim 11, wherein
in the second oligomer, a molar ratio of a polymer of the lactone-based compound and the second aliphatic diol-based compound is 5:1 to 1:10.

**15.** The polyester resin of claim 11, wherein
a molar ratio of the first oligomer and the second oligomer is 10:1 to 1:10.

**16.** The polyester resin of claim 12, wherein
a molar ratio of the first oligomer and the monomer is 10:1 to 1:10.

**17.** A method of manufacturing a polyester resin, comprising
copolymerizing a monomer mixture including a furan dicarboxylic acid-based compound, an aliphatic diol-based compound, and a lactone-based compound.

**18.** The method of claim 17, wherein

the copolymerizing of the monomer mixture includes
esterifying a furan dicarboxylic acid-based compound and a first aliphatic diol-based compound to prepare a first oligomer;
esterifying a lactone-based compound and a second aliphatic diol-based compound to prepare a second oligomer; and
subjecting the first oligomer and the second oligomer to an esterification reaction, a pre-polymerization reaction, and a poly-condensation reaction.

**19.** The method of claim 17, wherein

the copolymerizing of the monomer mixture includes
esterifying a furan dicarboxylic acid-based compound and an aliphatic diol-based compound to prepare a first oligomer;
subjecting the first oligomer and the lactone-based compound monomer to an esterification reaction, a pre-polymerization reaction, and a poly-condensation reaction.

**20.** The method of claim 18 or claim 19, wherein
the first oligomer is prepared in the presence of a titanium (Ti)-based catalyst including a heat stabilizer.

**21.** The method of claim 18, wherein
the second oligomer is prepared in the presence of an antimony (Sb)-based catalyst.

## INTERNATIONAL SEARCH REPORT

International application No.
**PCT/KR2022/018852**

**A. CLASSIFICATION OF SUBJECT MATTER**

**C08G 63/60**(2006.01)i; **C08G 63/668**(2006.01)i; **C08G 63/85**(2006.01)i; **C08G 63/86**(2006.01)i

According to International Patent Classification (IPC) or to both national classification and IPC

**B. FIELDS SEARCHED**

Minimum documentation searched (classification system followed by classification symbols)

C08G 63/60(2006.01); C08G 63/672(2006.01); C08G 63/85(2006.01); C08K 5/5317(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 폴리에스테르(polyester), 퓨란디카르복실산(furan dicarboxylic acid), 지방족 디올(aliphatic diol), 락톤(lactone), 블록(block), 랜덤(random)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | ZHENG, M. Y. et al. Poly(butylene 2, 5-furandicarboxylate-ε-caprolactone): A new bio-based elastomer with high strength and biodegradability. Express polymer letters. 2017, vol. 11, no. 8, pp. 611-621.<br>See abstract; page 613; figure 1; and tables 1 and 3. | 1-10,12,13,16,17,19<br>20<br>11,14,15,18,21 |
| Y | JP 2015-160871 A (TEIJIN LTD.) 07 September 2015 (2015-09-07)<br>See paragraphs [0040], [0041] and [0043]. | 20 |
| X<br>Y | WANG, X. et al. Synthesis and characterization of poly (ethylene 2, 5-furandicarboxylate-co-ε-caprolactone) copolyesters. European polymer journal. 2018, vol. 109, pp. 191-197.<br>See abstract; page 192; formula 1; and tables 1 and 4. | 1-10,12,13,16,17,19<br>20 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 March 2023** | **10 March 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.
**PCT/KR2022/018852**

**C. DOCUMENTS CONSIDERED TO BE RELEVANT**

| Category* | Citation of document, with indication, where appropriate, of the relevant passages | Relevant to claim No. |
|---|---|---|
| X<br>Y | CN 108467479 A (CHENGDU ZHONGKE PURUI PURIFYING EQUIPMENT CO., LTD. et al.) 31 August 2018 (2018-08-31)<br>See claims 1-10; and paragraphs [0031]-[0035]. | 1-10,12,13,16,17,19<br>20 |
| X | CN 107312167 A (TECHNICAL INSTITUTE OF PHYSICS AND CHEMISTRY, CHINESE ACADEMY OF SCIENCES) 03 November 2017 (2017-11-03)<br>See claims 1-10. | 1-10,17 |

Form PCT/ISA/210 (second sheet) (July 2022)

**INTERNATIONAL SEARCH REPORT**
**Information on patent family members**

International application No.
**PCT/KR2022/018852**

| Patent document cited in search report | Publication date (day/month/year) | Patent family member(s) | Publication date (day/month/year) |
| --- | --- | --- | --- |
| JP 2015-160871 A | 07 September 2015 | JP 6342673 B2 | 13 June 2018 |
| CN 108467479 A | 31 August 2018 | CN 108467479 B | 06 July 2021 |
| CN 107312167 A | 03 November 2017 | CN 107312167 B | 20 December 2019 |

Form PCT/ISA/210 (patent family annex) (July 2022)